Europäisches Patentamt

(19) European Patent Office

Office européen des brevets

(11) Numéro de publication : **0 296 080 B1**

(12)                                    **FASCICULE DE BREVET EUROPEEN**

(45) Date de publication du fascicule du brevet :         (51) Int. Cl.⁵ : **G03B 27/32**
04.12.91 Bulletin 91/49

(21) Numéro de dépôt : 88420196.3

(22) Date de dépôt : 14.06.88

(54) **Dispositif automatique intégrée pour effectuer simultanement en continu le développement de films photographiques ainsi que le tirage et le développement d'épreuves photographiques.**

(30) Priorité : 16.06.87 FR 8708680

(43) Date de publication de la demande :
21.12.88 Bulletin 88/51

(45) Mention de la délivrance du brevet :
04.12.91 Bulletin 91/49

(84) Etats contractants désignés :
BE CH DE ES FR GB IT LI

(56) Documents cités :
DE-C- 314 137
DE-C- 584 096
GB-A- 330 550
US-A- 4 185 912

(73) Titulaire : **Crasnianski, Serge**
**11 chemin des Buisses**
**F-38240 Meylan (FR)**
Titulaire : **KIS PHOTO INDUSTRIE S.a.r.l.**
**21 avenue du Général de Gaulle**
**F-38100 Grenoble (FR)**

(72) Inventeur : **Crasnianski, Serge**
**11 chemin des Buisses**
**F-38240 Meylan (FR)**

(74) Mandataire : **Laurent, Michel et al**
**Cabinet LAURENT et CHARRAS, 20, rue Louis**
**Chirpaz B.P. 32**
**F-69131 Ecully Cedex (FR)**

## Description

L'invention concerne un nouveau dispositif automatique intégré pour effectuer simultanément en continu le développement de films photographiques ainsi que le tirage et le développement d'épreuves photographiques.

Comme on le sait, une "unité de développement de films" comprend essentiellement une section de développement films dite aussi "développeuse négatif", constituée par une pluralité de bacs successifs de traitement chimique dans lesquels avance le film négatif à développer, et une zone de séchage du film développé.

De même, une "unité de tirage et de développement d'épreuves photographiques" comprend essentiellement :

• tout d'abord, une section d'exposition, constituée par une lampe, un système filtrant, un passe-vues, un objectif et un plan d'exposition, le tout aligné sur un trajet optique ;

• une section d'alimentation en papier comprenant une cartouche de papier photosensible, un moyen d'amenée du papier au plan d'exposition où se projette l'image à reproduire issue de l'objectif et un organe de coupe du papier insolé ;

• une section de développement du papier insolé, dite aussi "section développement papier", comprenant une pluralité de bacs successifs de traitement chimique et une zone de séchage de l'épreuve photographique.

Jusqu'à ce jour, le plus généralement, ces deux unités sont distinctes (voir par exemple brevets européens EP-A-0064015 et 0062593, ainsi que leurs correspondants américains respectifs US-A-4451141 et 4410257).

Dans le brevet US-A-4,185,912, on a suggéré de rassembler ces deux unités dans une carrosserie unique, de manière à réaliser un ensemble compact automatique destiné à permettre en continu le tirage de films ainsi que le développement d'épreuves photographiques. Dans cette réalisation, le film est tout d'abord transporté au travers des bacs successifs de la section de développement film par un tapis adhésif qui l'amène à la section d'exposition où est également amené le papier photosensible. Les deux unités de développement film et papier sont distinctes et superposées, de sorte que l'ensemble est complexe et volumineux. La mise en oeuvre de ce dispositif nécessite de nombreuses manipulations et présente certaines difficultés, notamment au niveau de l'exposition, spécialement pour assurer le synchronisme entre le film développé et le papier à insoler. Enfin, ce dispositif nécessite de faire appel à du personnel attentif, voire même spécialisé.

L'invention pallie ces inconvénients. Elle vise un dispositif automatique intégré comportant les deux unités du type en question, rassemblées dans une carrosserie unique, qui soit automatique, économique, facile à manipuler, et qui permette de traiter avantageusement un seul format de film et de papier et donc très spécifique, notamment pour le format dit "135" ou tout autre format courant.

L'invention vise également un dispositif automatique du type en question, compacte et facile à mettre en oeuvre même par du personnel non spécialisé.

Ce dispositif automatique intégré pour effectuer simultanément en continu le développement de films photographiques ainsi que le tirage et le développement d'épreuves photographiques, du type comprenant dans une carrosserie unique :

— une unité A de développement de films négatifs, constituée par une section de développement H film comprenant une pluralité de bacs successifs de traitement chimique dans lesquels avance le film négatif F et par une zone de séchage du film développé F' ;

— une unité B de tirage et de développement d'épreuves photographiques E comprenant :

• une section d'exposition C, comprenant une lampe, un système filtrant, un passe-vues et un objectif ;

• une section d'alimentation en papier D comprenant une cartouche de papier photosensible P, un moyen d'amenée du papier à un plan d'exposition où se projette l'image à reproduire issue de l'objectif et un organe de coupe du papier insolé P' ;

• une section de développement G du papier insolé P' comprenant une pluralité de bacs successifs de traitement chimique et une zone de séchage de l'épreuve photographique obtenue E.

Selon l'invention, ce dispositif se <u>caractérise</u> :

— d'une part, en ce que la section de développement H film et la section de développement G d'épreuves sont disposées côte à côte, de sorte que partie des bacs de traitement chimique et les zones de séchage sont accolées les unes aux autres en compartiments distincts ;

— d'autre part, en ce que la section d'exposition C de l'unité B de tirage est disposée en chambre noire au-dessus de la section de développement film H, alors que la section d'alimentation papier P qui lui fait suite est disposé au dessus de la section développement papier G ;

— par ailleurs, en ce que le film développé F' sort en chambre noire de l'unité A de développement pour pénétrer directement dans le passe-vues de la section d'exposition C disposée en-dessus de l'unité A de développement film ;

— et enfin, en ce que l'image à reproduire issue de l'objectif disposée après le passe-vues est reçue par un premier miroir disposé dans la section d'exposition C au-dessus de la section de développement film H, puis est transmise par réflexion sur un second miroir, parallèle au premier, mais disposé au-dessus de la section de développement papier G, pour amener cette image sur le plan d'exposition de la section d'alimentation papier D.

En d'autres termes, l'invention consiste à avoir accolé dans une carrosserie unique les deux unités de développement respectivement : film et papier, pour que partie essentielle des bacs de traitement chimique et que la section de séchage coïncident, puis à avoir disposé la sortie de l'unité de développement de film dans une chambre noire formant section d'exposition et à agencer dans cette section d'exposition un ensemble optique permettant de projeter l'image du film développé sur le papier photosensible au niveau du plan d'exposition par un jeu de miroirs le renvoyant dans un plan différent.

Avantageusement, en pratique :

— la zone de séchage et au moins un bac de lavage des deux sections de développement respectivement : film et papier, sont communs aux deux unités A de développement film et B de tirage ;

— le système de guidage du film F dans l'unité A de développement est constitué par deux rails de guidage parallèles, comportant chacun une rainure disposées face à face dans un même plan, espacées d'une distance égale à la largeur du film à développer, l'avancement du film F dans la section de développement H de l'unité A étant assuré par des paires de rouleaux motorisés successifs, dont l'un au moins des rouleaux comporte à ses deux extrémités un joint torique disposé en regard et en pression sur l'autre rouleau, de manière à pincer le film F à faire avancer à l'extérieur de la zone exposée ;

— la section d'exposition C en chambre noire comprend :

   • un premier module disposé au-dessus de l'unité A de développement du film, constitué par :

      x une lampe d'exposition,
      x un système filtrant,
      x un système diffuseur,
      x l'extrémité de sortie des deux rails de guidage du film développé formant pas se-vues,
      x un jeu de rouleaux moteurs destinés à entraîner le film à exposer,
      x un objectif,
      x un premier miroir incliné à 45°, destiné à réfléchir l'image du film à reproduire,

   • un second module disposé au-dessus de la section de développement papier G, constitué par un second miroir parallèle au premier destiné à réfléchir l'image à reproduire sur le plan d'exposition ;

— la zone de sortie du film développé de l'unité A de développement pénétrant dans la section d'exposition C formant le passe-vues comprend :

   • une fenêtre d'exposition orthogonale et centrée sur le trajet optique et disposée sur le plan situé dans le prolongement des deux rails de guidage ;

   • un système d'entraînement du film F' à exposer ;

   • une portion disposée juste en amont de cette zone de sortie dans laquelle les rails sont interrompus sur au moins un côté, de manière à former, en jouant sur la flexibilité du film, une zone d'accumulation pour le film développé F' qui avance en continu, alors que la vue en cours d'exposition est fixe ;

— le système d'entraînement du film développé F' à exposer comprend trois paires de rouleaux presseurs entraînés en synchronisme et dont les plans de tangence sont alignés, la première et la deuxième paires définissant une zone disposée juste en amont de la fenêtre d'exposition, destinée à recevoir le système d'analyse du film négatif, alors que la deuxième et la troisième paires sont disposées sur le trajet optique en face de cette fenêtre d'exposition pour former passe-vues.

La manière dont l'invention peut être réalisée et les avantages qui en découlent ressortiront mieux de l'exemple de réalisation qui suit, donné à titre indicatif et non limitatif à l'appui des figures annexées.

La figure 1 est une représentation perspective d'un dispositif conforme à l'invention vu de face de dessus.

La figure 2 est une représentation schématique sommaire de la disposition caractéristique de l'invention des différentes sections des deux unités A et B.

La figure 3 est une vue perspective sommaire du dispositif de l'invention montré en position ouverte.

La figure 4 est une vue en coupe longitudinale de l'unité de développement film A selon l'axe IV-IV' de la figure 2.

La figure 5 est une vue en coupe longitudinale de la section de développement film selon l'axe V-V' de la figure 3.

La figure 6 est une vue en coupe sommaire longitudinale de l'unité de tirage et développement papier B selon l'axe VI-VI' de la figure 2.

La figure 7 est une représentation en coupe transversale de la cuve contenant les deux sections accolées respectivement de développement film H et de développement papier G selon l'axe VII-VII' de la figure 3.

La figure 8 est une vue détaillée des rails de guidage du film de la section de développement alors que la figure 9 montre en détail un organe d'entraînement du film dans cette section de

développement ;

— la figure 10 est une représentation schématique sommaire de la section de sortie du film développe F' pénétrant dans le passe-vues de la section d'exposition C ;

— la figure 11 est une vue de dessus du dispositif en coupe transversale selon l'axe XI-XI' de la figure 3 ;

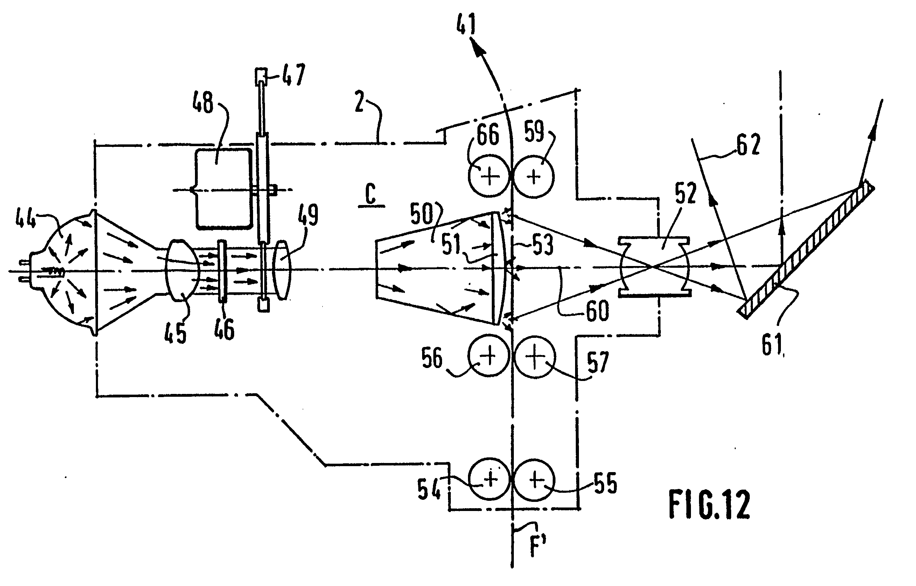

— enfin la figure 12 est une vue détaillée en coupe longitudinale selon l'axe XII-XII' de la figure 11.

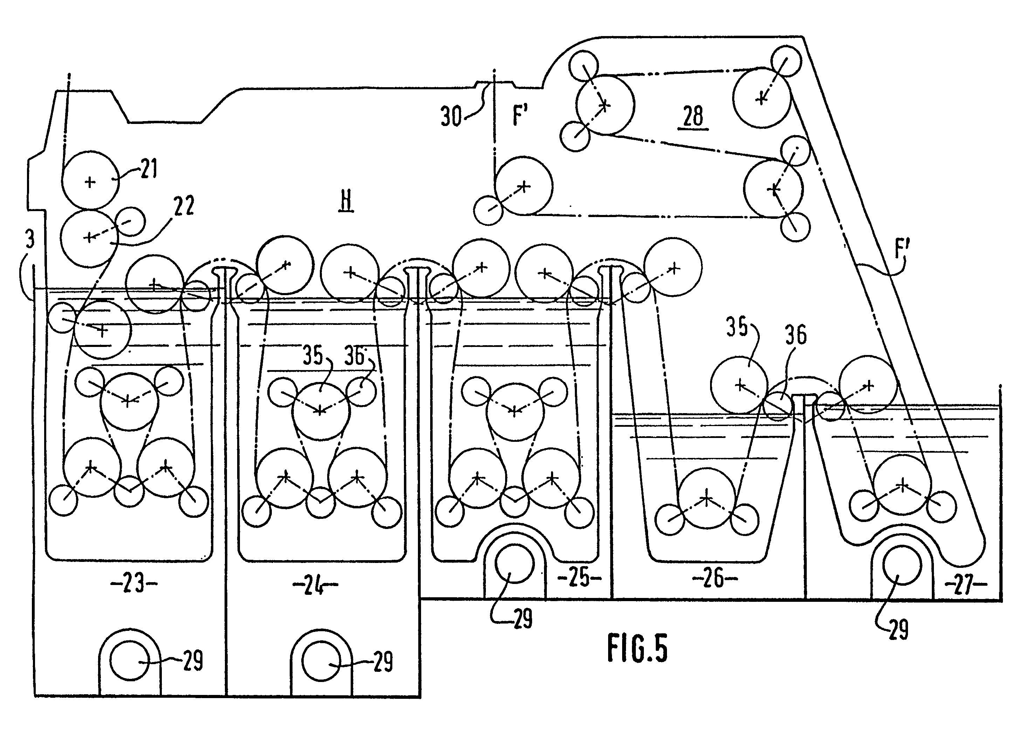

Le dispositif intégré automatique pour effectuer simultanément en continu le développement des films photographiques F, ainsi que le tirage et le développement des épreuves photographiques E conforme à l'invention est enfermé par une carrosserie unique rigide désignée par la référence générale (1). Cette carrosserie (1) est avantageusement en matière plastique moulée, résistante aux conditions d'usage, par exemple en PPO. Cette carrosserie (1) présente essentiellement deux parties distinctes, à savoir un couvercle (2) et une cuve (3) articulés sur le côté par des charnières (4) et dont le mouvement de fermeture est assisté par un vérin (5) (figure 3).

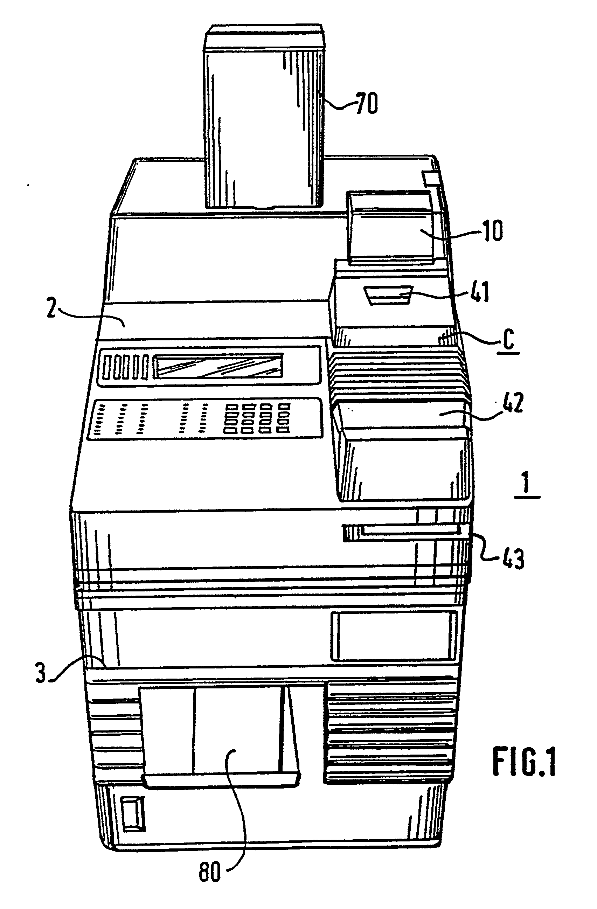

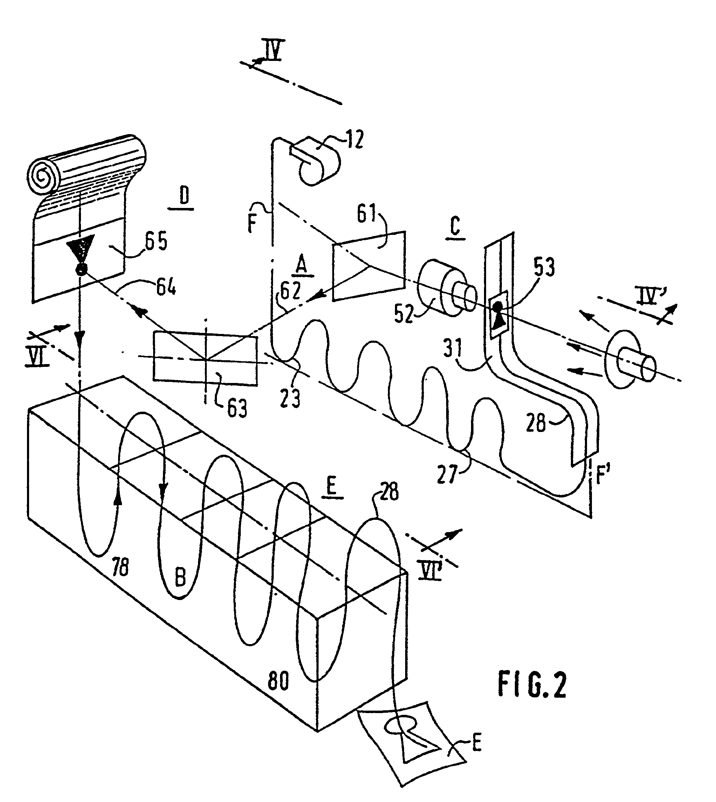

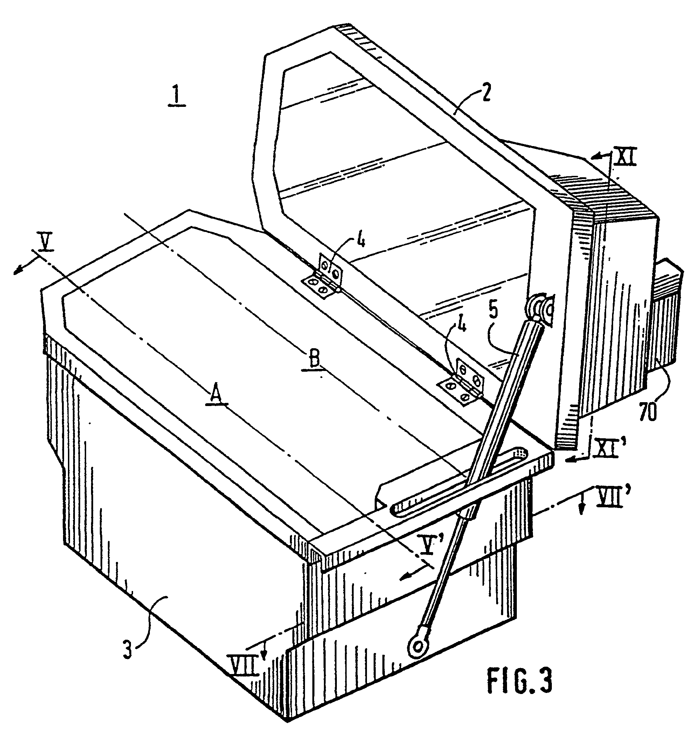

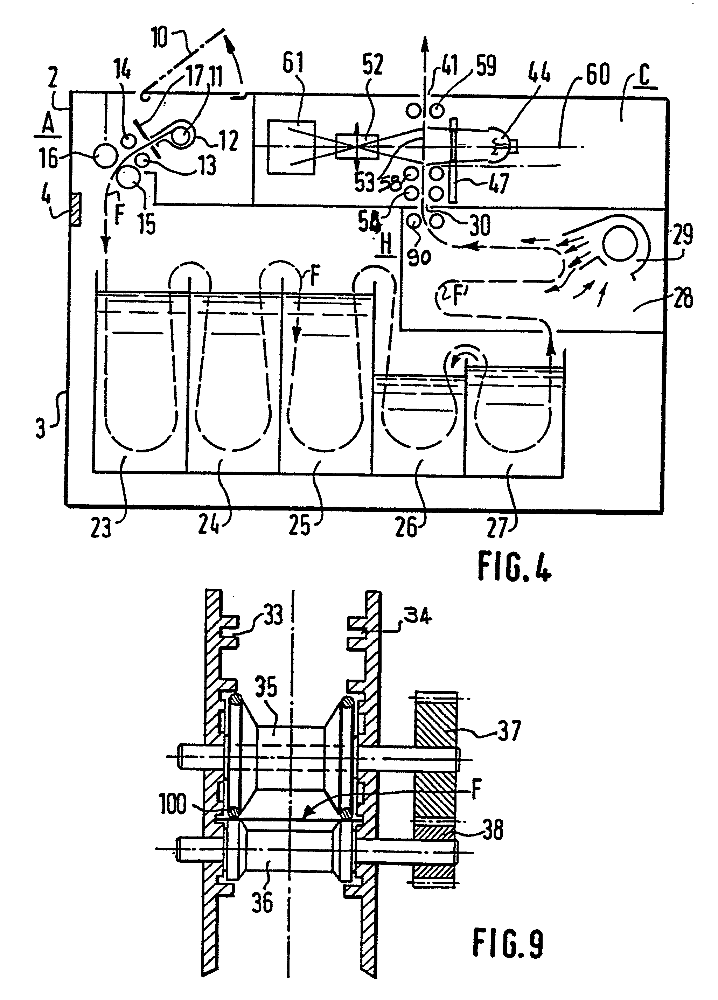

En se référant aux figures 1 à 4, ce dispositif comprend tout d'abord un couvercle articulé (10) destiné à introduire la bobine de film négatif (11) à développer dans un berceau (12). L'extrémité du film désignée par la référence générale F est introduite entre une paire de rouleaux d'engagement (13, 14) à commande manuelle depuis l'extérieur, ou automatique. Le film F est ensuite pris en charge par une paire de rouleaux motorisés (15, 16). Une cisaille (17) (voir figure 4) disposée avant les deux paires de rouleaux (13, 14) et (15, 16) coupe l'extrémité F, lorsque celui-ci est totalement déroulé.

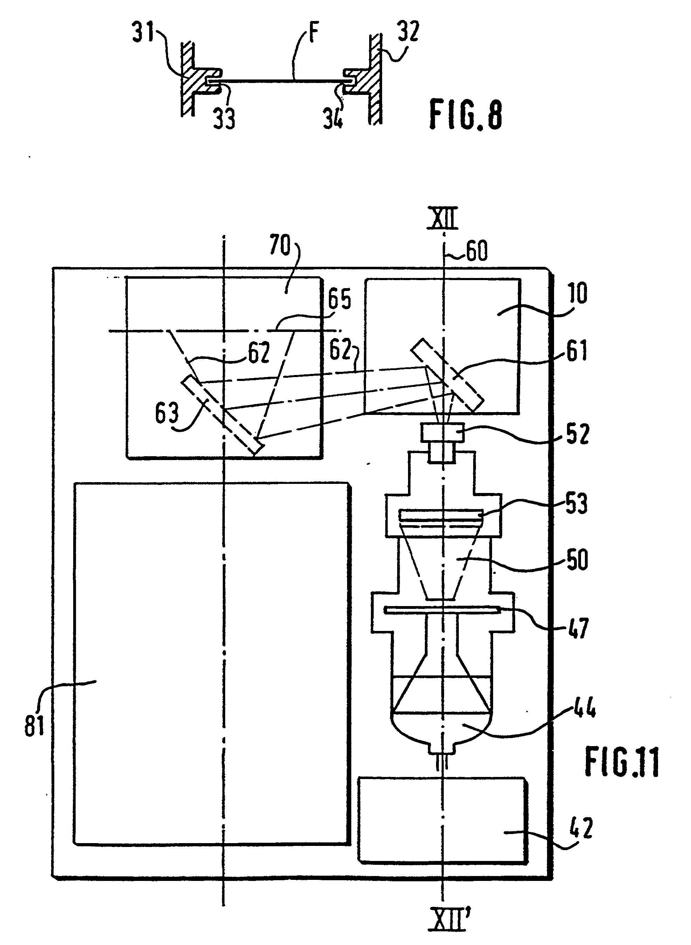

Par une paire de rainures détaillées aux figures 8 et 10, le film F tiré par des rouleaux motorisés (21, 22) pénètre dans la section de développement film H de l'unité de développement film A de la cuve (3) montrée en détail aux figures 2, 4 et 5. Cette section de développement film, désignée par la référence générale H est constituée de manière connue par une pluralité de bacs successifs (23 à 27) et est suivie par une section de séchage (28). Chaque bac (23-27) est rempli de produits liquides chimiques appropriés par exemple type "C41", chauffés par des résistances électriques (29) à la température souhaitée. Ces bacs sont dans l'ordre :

• un bac (23) pour le révélateur film,

• un bac (24) pour le blanchiment,

• un bac (25) pour le fixateur,

• un bac (26) pour le premier lavage (ou de super-stabilisant),

• un bac (27) pour le second lavage.

Selon une caractéristique de l'invention, le liquide propre de lavage est amené dans le second bac (27) qui, grâce à un trop-plein passe dans le premier bac (26), ce qui assure ainsi toujours un lavage parfait à contre-courant.

Le film développé F' pénètre ensuite dans la zone de séchage (28) où il est soumis à l'action d'un ventilateur chauffant (29) (voir figure 4).

Selon une caractéristique essentielle de l'invention, le film développé séché F' sort verticalement de l'unité de développement film A par une fente pour pénétrer directement dans la section d'exposition C de l'unité de tirage papier B disposée en chambre noire juste en dessus de la section de développement film H.

Dans la section de développement film H, le film F (voir figures 8, 9, 10) est guidé entre deux rails parallèles (31) et (32) présentant chacun une rainure (33, 34) disposées face à face dans le même plan et dont l'écartement est égal à la largeur du film F à développer. L'avancement du film F dans cette section H et plus précisément dans le rack unique destiné à être introduit dans les bacs successifs (23-27), est assuré par des paires de rouleaux presseurs motorisés successifs (35, 36) entraînés par des pignons (37, 38). L'ensemble est commandé par un moteur unique, non représenté, et par des jeux de renvois. L'un de ces deux rouleaux (36), en l'occurence, présente à chacune de ses deux extrémités un joint torique (100) qui pince le film F sur les bords de l'autre rouleau (36), mais à l'extérieur de la zone exposée. Ce joint torique (100) assure un pressage constant, régulier et uniforme et est facile à changer.

Pour permettre (voir figure 10) l'exposition du film développé séché F' dans la section d'exposition C, il importe que le film F' qui avance en continu soit stocké provisoirement pendant la durée de la phase d'exposition. Pour ce faire, juste avant la sortie (30) de la section H, les deux rails de guidage (31, 32) sont interrompus, au moins sur un côté, pour former deux coudes (39, 40) définissant ainsi entre eux une zone d'accumulation (41) en forme de boucle et ce, en jouant sur la flexibilité du film F'. Celui-ci, comme déjà dit, étant entraîné en continu alors que la prise de vue est fixe, forme une boucle (41) en attente sous l'effet d'avancement de la dernière paire de rouleaux (90, 91) du rack, alors que pour la prise de vue les autres paires (57, 58) et (59, 66) sont arrêtées.

Selon une autre caractéristique de l'invention, le film développé séché F', qui avance verticalement depuis la fente (30), pénètre alors dans le passe-vues de la section d'exposition C, puis de là ressort vers l'extérieur par la fente (41) prévue à cet effet sur le haut de la carrosserie (1) et plus précisément du couvercle (2) (figure 1).

La section d'exposition C de l'unité de tirage et développement papier B est comme déjà dit disposée en chambre noire pour partie essentielle au-dessus de chambre noire pour partie essentielle au-dessus de l'unité de développement film A. Cette section d'exposition C comprend essentiellement dans l'ordre (voir figures 4, 11 et 12) :

— un densitomètre (42) auquel on a accès par une fente (43) ;

— une lampe d'exposition (44), par exemple du type halogène 75 Watts à réflecteur elliptique ;

— un condenseur (45) ;

— un filtre à infra-rouge (46) ;

— un disque porte-filtres (47) entraîné en rotation par un moteur pas à pas (48), lui-même asservi à la carte de commande électronique (81) ;

— un deuxième condenseur (49) ;

— un prisme de mélange (50) avec son diffuseur de sortie (51) ;

— un objectif (52).

La référence (53) désigne la vue du film F' à reproduire en place dans le système passe-vues de la section d'exposition C.

Ce système passe-vues (voir figures 4 et 12) comprend essentiellement trois paires de rouleaux presseurs motorisés entraînés en synchronisme et commandés par la carte électronique (81), à savoir respectivement :

• une première paire (54, 55) d'introduction et de sécurité ;

• une seconde paire (56, 57) d'entraînement ;

• une troisième paire (59, 66) d'extraction.

La référence (60) désigne l'axe optique d'exposition du film négatif (53) à reproduire.

Le faisceau issu de l'objectif (52) rencontre en ligne droite un premier miroir (61) incliné à 45° par rapport à cet axe optique (60). Ce miroir (61) est également disposé au-dessus de la section de développement film H. Pour faciliter la compréhension, sur la figure 12, on a représenté ce miroir (61) dans une position erronée. On comprend aisément toutefois que ce miroir (61) doit être disposé dans les positions représentées aux figures 2 et 11. Ce miroir (61) est d'un type connu. Il s'agit notamment d'un miroir optique, c'est-à-dire présentant une face réfléchissante extérieure recouverte d'une couche d'étain. Dans une version perfectionnée, ce miroir (61) peut être légèrement réglable en inclinaison pour permettre un meilleur centrage optique.

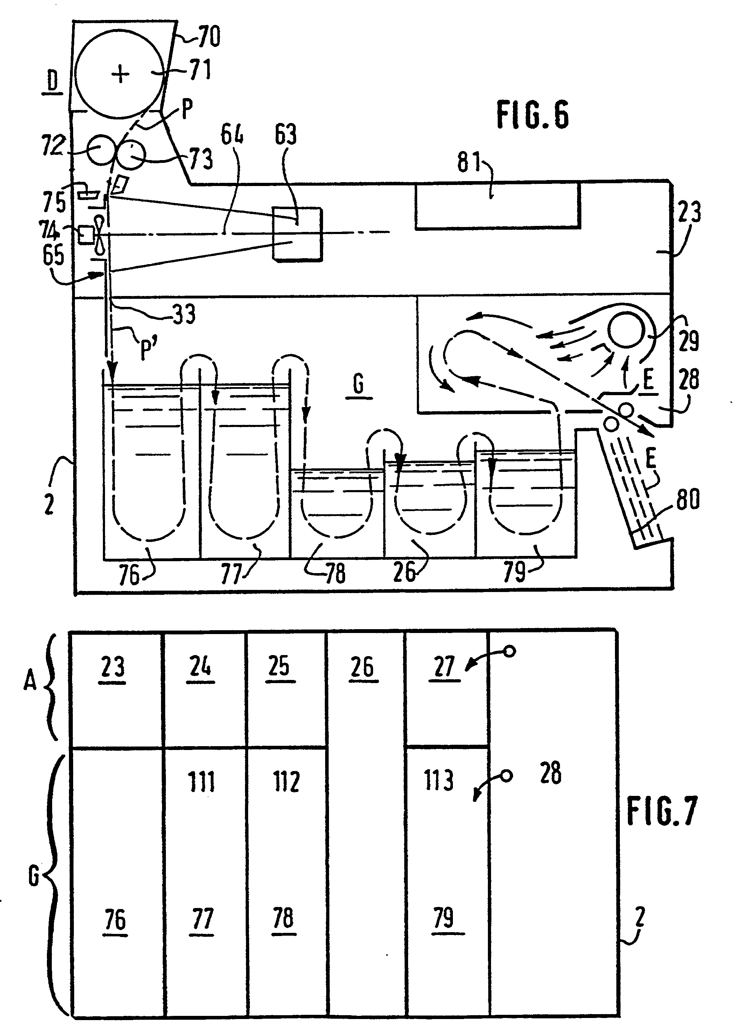

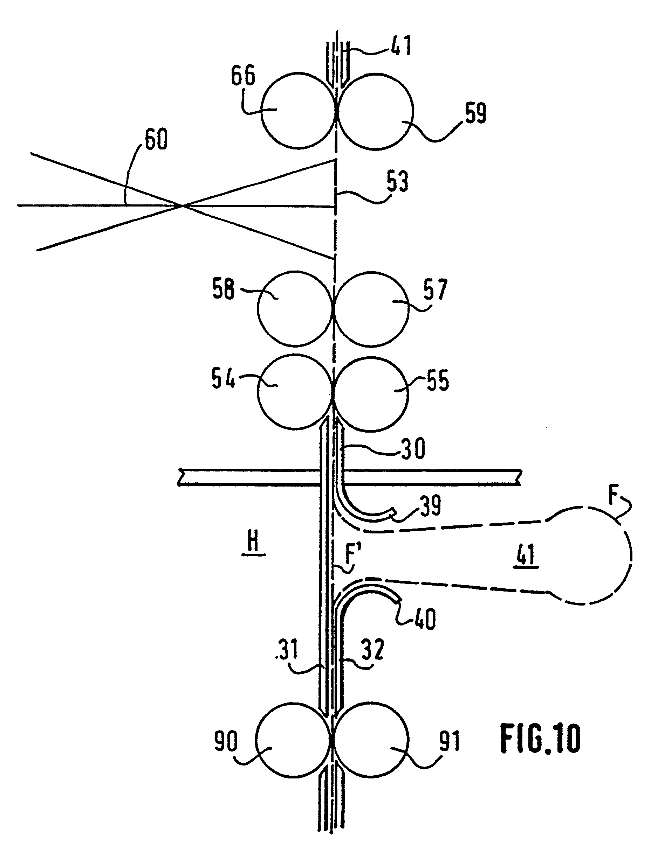

Selon l'une des caractéristiques fondamentales de l'invention, le faisceau optique (62) réfléchi par le premier miroir (61) est reçu par un second miroir (63) parallèle au premier, mais disposé au-dessus de la section de développement G de l'unité de tirage B et qui est montrée en détail à la figure 6. Ce second miroir (63) est fixe, mais est préréglé selon le format d'agrandissement choisi.

L'image à reproduire (64) réfléchie par le second miroir (63) est reçue sur le plan d'exposition (65) de la section d'alimentation D de l'unité B.

Selon une caractéristique fondamentale de l'invention (voir figures 2, 7 et 11), l'unité de développement film A et la section de développement G de l'unité papier B sont disposées côte à côte dans la cuve (2) de sorte que partie des bacs de traitement chimique, ainsi que les zones de séchage soient accolés, mais dans des compartiments distincts.

La section d'alimentation D de l'unité B comprend de manière connue une cassette (70) destinée à recevoir la bobine (71) de papier photosensible P. Ce papier P est entraîné par une paire de rouleaux motorisés (72, 73), puis est plaqué contre le plan d'exposition (65) par un ventilateur (74). Une cisaille (75) coupe la longueur appropriée de papier insolé P'.

Une fois insolé, le papier coupé P' tombe par gravité (figure 6) dans la section de développement papier G qui comprend de manière connue dans l'ordre :

• un bac (76) destiné à recevoir le révélateur,

• un bac (77) destiné à recevoir la composition liquide blanchiment/fixage,

• trois bacs (78, 26, 79) de lavage (ou de superstabilisant).

Selon une autre caractéristique de l'invention (figure 7), le bac du premier lavage de la section développement film (26) et le deuxième bac de lavage de la section développement papier G sont communs. De même, la section de séchage (28) est commune à ces deux sections H et G. En pratique, dans la section développement film H, les bacs (23) à (27) reçoivent un rack unique dans lequel s'achemine progressivement le film F à développer, alors que dans la section développement papier G, les bacs (76, 77) reçoivent deux racks séparés, alors que les autres bacs successifs (78, 26, 79) reçoivent chacun un rack. De même, comme déjà dit, les bacs sont remplis chacun d'une composition chimique appropriée en fonction du traitement retenu, telle que par exemple une composition C41 pour la section H ou une chimie dite "rapide" type "$RA_4$ de KODAK" pour la section G.

L'épreuve photographique développée E est recueillie par gravité dans un bac de réception (80) prévu à cet effet sur le devant de la carrosserie (1). Une carte électronique de commande (81) assure l'asservissement de tous les organes de la machine.

Le dispositif selon l'invention présente de nombreux avantages par rapport à ceux énumérés dans le préambule, notamment par rapport au dispositif décrit dans le brevet américain U-A-4185912. On peut citer :

• la compacité ;

• la simplicité de construction mécanique, donc la possibilité d'une production à un coût réduit, donc en grande série ;

• la simplicité de mise en oeuvre par du personnel non spécialisé ;

• une adaptation parfaite aux formats standard.

De la sorte, ce dispositif peut être utilisé avec succès pour le développement automatique intégré d'épreuves photographiques à partir de films négatifs.

## Revendications

1. Dispositif automatique intégré pour effectuer simultanément en continu le développement de films photographiques (F), ainsi que le tirage et le développement d'épreuves photographiques (E), du type comprenant dans une carrosserie unique (1) :

— une unité (A) de développement de films négatifs, constituée par une section de développement film (H) comportant une pluralité de bacs (23-27) successifs de traitement chimique dans lesquels avance le film négatif (F), et par une zone de séchage (28) du film développé (F') ;

— une unité (B) de tirage et de développement d'épreuves photographiques (E) comprenant :

• une section d'exposition (C) constituée par une lampe (44), un système filtrant (47), un passe-vues (54-59) et un objectif (52),

• une section d'alimentation papier (D) contenant une cartouche (70) de papier photosensible (P), un moyen d'amenée (72, 73) du papier (P) à un plan d'exposition (65) où se projette l'image (64) à reproduire, issue de l'objectif (52), et un organe de coupe (75) du papier insolé (P') ;

• une section de développement (G) du papier insolé (P)' constituée par une pluralité de bacs (76-79) successifs de traitement chimique et par une zone de séchage (28) de l'épreuve photographique (E) obtenue ;

caractérisé :

— en ce que la section de développement film (H) de l'unité (A) de developpement de films négatifs et la section de développement papier (G) de l'unité (B) de tirage et de développement d'épreuves photographiques sont disposées côte à côte, de sorte que partie des bacs de traitement (23-27, 76-79) chimiques et les zones de séchage (28) sont accolées les unes aux autres en compartiments distincts ;

— en ce que la section d'exposition (C) de l'unité (B) de tirage et de développement d'épreuves photographiques est disposée en chambre noire au-dessus de la section de développement film (H), alors que la section d'alimentation (P) qui lui fait suite est disposée au-dessus de la section de développement papier (G) ;

— en ce que le film développé (F') sort en chambre noire de la section de développement film (H) pour pénétrer directement dans le passe-vues (54-59) de la section d'exposition (C) disposée en dessus de la section de développement film (H) ;

— et, en ce que l'image à reproduire (62, 64) issue de l'objectif (52) disposé après le passe-vues est reçue par un premier miroir (61) disposé dans la section d'exposition (C) au dessus de la section de développement film (H), puis est transmise par réflexion (62) sur un second miroir (63) parallèle au premier miroir (61), mais disposé au-dessus de la section de développement papier (G), de manière à amener cette image (64) sur le plan d'exposition (65) de la section d'alimentation papier (D).

2. Dispositif selon la revendication 1, caractérisé en ce que la zone de séchage (28) et au moins un des bacs de lavage (26) des deux sections de développement respectivement : film (H) et papier (G) sont communs aux deux unités (A) de développement de films négatifs et (B) de tirage et de développement d'épreuves photographiques.

3. Dispositif selon la revendication 1, caractérisé en ce que dans la section de développement film (H), le système de guidage du film (F) négatif est constitué par deux rails de guidage parallèles (31, 32) comportant chacun une rainure (33, 34) disposée face à face dans un même plan et dont l'écartement est égal à la largeur du film (F) à développer, l'avancement du film (F) dans cette section (H) étant assuré par des paires de rouleaux motorisés (35, 36) dont l'un au moins comporte à son extrémité des joints toriques (100) disposés en regard et en pression sur l'autre rouleau (36), de manière à pincer le film (F) à faire avancer à l'extérieur de la zone exposée.

4. Dispositif selon la revendication 1, caractérisée en ce que la section d'exposition (C) comprend :

— un premier module disposé au-dessus de la section de développement film (H) constitué par une lampe d'exposition (44), un système filtrant (47), un système diffuseur (50), l'extrémité de sortie (30) des deux rails de guidage (31, 32) du film (F') développé formant passe-vues, une paire de rouleaux moteurs (57-59) destinés à entraîner le film (F') développé, un objectif (52) et un premier miroir (61) incliné à 45° destiné à réfléchir l'image du film exposé (53) ;

— un second module disposé au-dessus de la section de développement papier (G) comprenant un second miroir (63) parallèle au premier, destiné à réfléchir l'image à reproduire (64) sur le plan d'exposition (65).

5. Dispositif selon l'une des revendications 1 à 4, caractérisé en ce que la portion des rails (31, 32) de guidage du film (F) dans la section (H), disposée juste en amont de la sortie (30), est interrompue au moins sur un côté de manière, en jouant sur la flexibilité du film (F), à former une zone d'accumulation (41) pour le film développé (F') qui avance en continu, alors que la vue (53) en cours d'exposition dans la section d'exposition (C) est fixe.

6. Dispositif selon la revendication 5, caractérisé en ce que le système d'entraînement du film développé (F') à exposer comprend trois paires de rouleaux presseurs entraînés en synchronisme et dont les plans de tangence sont alignés, la première (54, 55) et la deuxième paires (57, 58) définissant une zone disposée juste en amont de la fenêtre d'exposition (53), destinée à recevoir le système d'analyse du film négatif, alors que la dite deuxième paire (57, 58) et la troisième paire (59, 66) sont disposées sur le trajet optique (60) pour former passe-vues.

**Patentansprüche**

1. Integrierte automatische Vorrichtung zur gleichzeitigen kontinuierlichen Entwicklung von Filmen (F) und zum Abziehen und Entwickeln von photographischen Bildern (E), die in einem Gehäuse (1) enthält:

— eine Einheit (A) für das Entwickeln von Negativfilmen, bestehend aus einem Film- Entwicklungsabschnitt (H), der eine Anzahl von aufeinanderfolgenden Behältern (23-27) zur chemischen Behandlung aufweist, durch die der Negativfilm (F) vorrückt, und aus einer Trockenzone (28) für den entwickelten Film (F');

— eine Einheit (B) für das Abziehen und Entwickeln von photographischen Bildern (E), bestehend aus:

• einem Belichtungsabschnitt (C), der von einer Lampe (44), einem Filtersystem (47), einer Transportschaltung (54-59) und einem Objektiv (52) gebildet ist,

• einem Papierzuführungsabschnitt (D), der eine Patrone (70) mit lichtempfindlichem Papier (P), Mittel (72, 73) für die Zuführung des Papiers (P) in eine Belichtungsebene (65), in der sich das vom Objektiv (52) ausgehende, zu reproduzierende Bild (64) abbildet, und ein Schneidorgan (75) für das belichtete Papier (P') beinhaltet,

• einem Papier-Entwicklungsabschnitt (G) für das belichtete Papier (P'), der aus einer Anzahl von aufeinanderfolgenden Behältern (76-79) zur chemischen Behandlung und aus einer Trockenzone (28) für die erhaltenen photographischen Bilder (E) gebildet ist;
dadurch gekennzeichnet,

— daß der Film-Entwicklungsabschnitt (H) der Einheit (A) für das Entwickeln von Negativfilmen und der Papier-Entwicklungsabschnitt (G) der Einheit (B) für das Abziehen und Entwickeln von photographischen Bildern nebeneinander angeordnet sind, derart, daß Teile der Behälter (23-27, 76-79) zur chemischen Behandlung und die Trockenzonen (28) in bestimmten Bereichen miteinander verbunden sind;

— daß der Belichtungsabschnitt (C) der Einheit (B) für das Abziehen und Entwickeln von phoptographischen Bildern in einer Dunkelkammer oberhalb des Film-Entwicklungsabschnittes (H) angeordnet ist, während der daran anschließende Papierversorgungsabschnitt (D) oberhalb des Papier-Entwicklungsabschnitts (G) angeordnet ist;

— daß der entwickelte Film (F') in die Dunkelkammer aus dem Film-Entwicklungsabschnitt (H) austritt, um unmittelbar die Transportschaltung (54-59) des oberhalb des Film-Entwicklungsabschnittes (H) angeordneten Belichtungsabschnittes (C) zu durchlaufen;

— und daß das zu reproduzierende Bild (62, 64), das von dem hinter der Transportschaltung angeordneten Objektiv (52) ausgeht, von einem ersten Spiegel (61) übernommen wird, der im Belichtungsabschnitt (C) oberhalb des Film-Entwicklungsabschnittes (H) angeordnet ist, dann durch Reflexion (62) auf einen zweiten Spiegel (63) übertragen wird, der zum ersten Spiegel (61) parallel, jedoch oberhalb des Papier-Entwicklungsabschnittes (G) angeordnet ist, derart, daß dieses Bild (64) auf die Belichtungsebene (65) des Papierversorgungsabschnittes (D) gebracht wird.

2. Vorrichtung nach Anspruch 1, dadurch gekennzeichnet, daß die Trockenzone (28) und mindestens einer der Waschbehälter (26) der beiden Entwicklungsabschnitte für Film (H) und für Papier (G) für die beiden Einheiten (A) für das Entwickeln von Negativfilmen und (B) für das Abziehen und Entwickeln von photographischen Bildern gemeinsam sind.

3. Vorrichtung nach Anspruch 1, dadurch gekennzeichnet, daß in dem Film-Entwicklungsabschnitt (H) das System zur Führung des Negativfilms (F) gebildet ist durch zwei parallele Führungsschienen (31, 32), von denen jede eine Nut (33, 34) aufweist, die gegenüberliegend in der gleichen Ebene angeordnet sind und deren Abstand gleich der Breite des zu entwickelnden Films (F) ist, wobei der Vorschub des Films (F) in diesem Abschnitt (H) durch angetriebene Rollenpaare (35, 36) erfolgt, von denen mindestens eine an ihrem Ende Runddichtringe (100) aufweist, die der anderen Rolle (36) gegenüberliegend und unter Druck auf diese angeordnet sind, derart, daß der Film (F) zum Vorschub aus der Belichtungszone heraus eingeklemmt ist.

4. Vorrichtung nach Anspruch 1, dadurch gekennzeichnet, daß der Belichtungsabschnitt (C) umfaßt:

— eine erste oberhalb des Film- Entwicklungsabschnittes (H) angeordnete Baueinheit, die gebildet ist aus einer Belichtungslampe (44), einem Filtersystem (47), einem Streusystem (50), dem Austrittsende (30) der beiden Führungsschienen (31, 32) für den entwickelten Film (F'), die eine Transportschaltung bilden, einem Paar Antriebsrollen (57-59) zur Mitnahme des entwickelten Films (F'), einem Objektiv (52) und einem ersten, um 45° geneigten Spiegel (61) zum Reflektieren des Bildes (53) des belichteten Films;

— eine zweite Baueinheit, die oberhalb des Papier-Entwicklungsabschnittes (G) angeordnet ist und einen zum ersten Spiegel parallelen zweiten Spiegel (63) aufweist, der zum Reflektieren des zu reproduzierenden Bildes (64) auf die Belichtungsebene (65) bestimmt ist.

5. Vorrichtung nach einem der Ansprüche 1 bis 4, dadurch gekennzeichnet, daß der Teil der Führungsschienen (31, 32) für den Film (F) im Abschnitt (H), der unmittelbar vor dem Austritt (30) angeordnet ist, mindestens auf einer Seite derart unterbrochen ist, daß unter Ausnutzung der Flexibilität des Films (F) eine Speicherzone (41) für den entwickelten, kontinuierlich vorlaufenden Film (F') gebildet wird, damit der Bildausschnitt (53) während der Belichtung im Belichtungsabschnitt (C) feststeht.

6. Vorrichtung nach Anspruch 5, dadurch gekennzeichnet, daß das Mitnahmesystem des entwickelten, zu belichtenden Films (F') drei Paar synchron angetriebene Druckrollen umfaßt, deren Berührungsebenen fluchten, wobei das erste Paar (54, 55) und das zweite Paar (57, 58) eine Zone definieren, die unmittelbar vor dem Belichtungsfenster (53) gelegen ist und zur Aufnahme des Analysesystems des Negativfilms bestimmt ist, während das zweite Paar (57, 58) und das dritte Paar (59, 66) als Transportschaltung auf dem Lichtweg (60) angeordnet sind.

## Claims

1. Integrated automatic machine for simultaneously and continuously effecting the development of photographic films (F) and the printing and development of photographic prints (E), of the type comprising in a single casing (1) :
— a unit (A) for developing negative films, consisting of a film development section (H) comprising a plurality of successive chemical treatment tanks (23-27) through which the negative film (E) advances, and of a drying zone (28) for the developed film (F') ;
— a printing and development unit (B) for photographic prints (E), comprising :
  • an exposure section (C), comprising a lamp (44), a filter system (47), a negative carrier (54-59), and a lens (52) ;
  • a paper feed section (D) comprising a packet (70) of photosensitive paper (P), a means (72-73) bringing the paper (P) to an exposure surface (65) onto which the image (64) to be reproduced, coming from the lens (52), is projected, and a means (75) for cutting the exposed paper (P') ;
  • a development section (G) for the exposed paper (P'), comprising a plurality of successive chemical treatment tanks (76-79), and a zone for drying the resulting photographic prints (E) ;

characterized :
— in that the film development section (H) of the unit (A) for developing negative films, and the paper development section (G) of the printing and development unit (B) for photographic prints (E) are disposed side by side, so that some of the chemical treatment tanks (23-27, 76-79) and the drying zones (28) are disposed side by side in separate compartments ;
— in that the exposure section (C) of the printing and development unit (B) for photographic prints (E) is disposed in the dark above the film development section (H), while the feed section (P) following it is disposed above the paper development section (G) ;
— in that the developed film (F') passes out in the dark from the film development section (H) to penetrate directly into the negative carrier (54-59) of the exposure section (C) disposed above the film development section (H) ;
— and that in the image (62, 64) to be reproduced, coming from the lens (52) disposed after the negative carrier, is received by a first mirror (61) disposed in the exposure section (C) above the film development section (H), and is then transmitted by reflection (62) onto a second mirror (63) parallel to the first mirror (61) but disposed above the paper development section (G), to bring this image (64) onto the exposure surface (65) of the paper feed section (D).

2. Machine according to claim 1, characterized in that the drying zone (28) and at least one of the washing tanks (26) of the two development sections (H) and (G) for film and paper respectively are common to the two units : (A) for developing negative films and (B) printing and development unit for photographic prints (E).

3. Machine according to claim 1, characterized in that in the film development section (H) the guide system for the negative film (F) comprises two parallel guide rails (31, 32) provided with respective grooves (33, 34) facing one another in the same plane and spaced apart by a distance equal to the width of the film (F) to be developed, the film (F) being transported in this section (H) by pairs of motorized rollers (35, 36), at least one of which rollers has at both ends an O-ring seal (100) disposed facing and pressing against the other roller (36), in such a manner as to grip, outside the exposed zone, the film (F) which is to be transported.

4. Machine according to claim 1, characterized in that the exposure section (C) comprises :
— a first module disposed above the film development section (H) and consisting of an exposure lamp (44), a filter system (47), a diffusing system (50), the outlet end (30) of the two guide rails (31, 32) for the developed film (F') forming a negative carrier, a pair of drive rollers (57-59) intended for driving the developed film (F'), a lens (52), and a first mirror (61) inclined at 45° and intended for reflecting the image (53) of the exposed film ;

— a second module disposed above the paper development section (G) and consisting of a second mirror (63) parallel to the first and intended for reflecting the image (64) to be reproduced onto the exposure surface (65).

5. Machine according to one of claims 1 to 4, characterized in that that portion of the rails (31, 32) guiding the film (F) in the section (H) which lies just upstream of the outlet (30) is interrupted at least on one side in such a manner as to form, taking advantage of the flexibility of the film (F), an accumulation zone (41) for the developed film (F'), which advances continuously, whereas the image (53) being exposed in the exposure section (C) is stationary.

6. Machine according to claim 5, characterized in that the system driving the developed film (F') to be exposed comprises three pairs of synchronously driven pressure rollers whose planes of tangency are in alignment, the first pair (54, 55) and the second pair (57, 58) defining a zone disposed just upstream of the exposure window and intended to receive the negative film analysis system, the said second pair (57, 58) and third pair (59, 66) being disposed on the optical path (60) in order to form the negative carrier.

70

10

41

2

C

42

1

43

3

80

FIG.1

FIG.2

FIG.3

FIG.4

FIG.9

FIG.5

EP 0 296 080 B1

**FIG.6**

**FIG.7**

FIG.10

FIG.8

FIG.11

FIG.12